(19) Europäisches Patentamt / European Patent Office / Office européen des brevets

(11) **EP 2 278 696 A1**

(12) **DEMANDE DE BREVET EUROPEEN**

(43) Date de publication:
**26.01.2011 Bulletin 2011/04**

(51) Int Cl.:
***H02M 3/158*** *(2006.01)*

(21) Numéro de dépôt: **10169904.9**

(22) Date de dépôt: **16.07.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **23.07.2009 FR 0955135**

(71) Demandeur: **STMicroelectronics (Tours) SAS**
**37100 Tours (FR)**

(72) Inventeur: **Peron, Benoit**
**37000, Tours (FR)**

(74) Mandataire: **de Beaumont, Michel**
**Cabinet Beaumont**
**1, rue Champollion**
**38000 Grenoble (FR)**

(54) **Convertisseur élévateur-inverseur et son procédé de commande**

(57)      L'invention concerne un circuit d'alimentation apte à fournir deux tensions régulées ($V_{ON}$, $V_{OFF}$) à partir d'une tension d'entrée continue ($V_{in}$), comprenant un convertisseur élévateur de tension à découpage (B) et un convertisseur inverseur de tension à découpage (BB), **caractérisé en ce qu**'il comprend un unique élément inductif (L) commun aux convertisseurs élévateur et inverseur.

Fig 4

Printed by Jouve, 75001 PARIS (FR)

**Description**

Domaine de l'invention

La présente invention concerne des convertisseurs de tension et, plus particulièrement, un convertisseur permettant une conversion de type élévateur de tension à découpage ou survolteur (boost) en parallèle d'une conversion de type inverseur de tension (par rapport à une référence, généralement la masse) à découpage (buck-boost).

Exposé de l'art antérieur

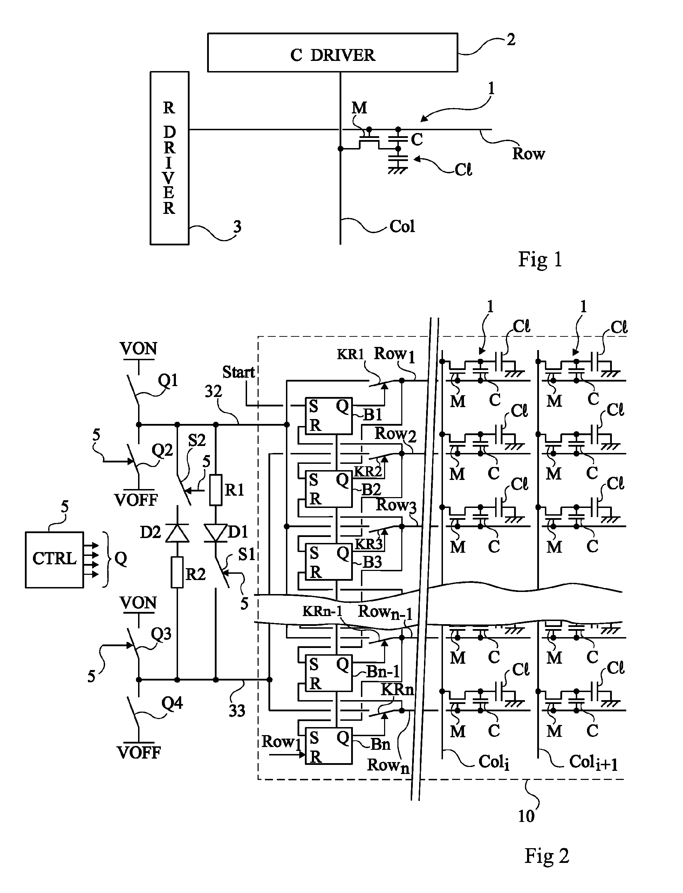

La figure 1 représente, de façon partielle et schématique, un pixel 1 d'un écran LCD monochrome ou un sous-pixel d'un écran LCD couleur du type auquel s'applique plus particulièrement la présente invention. Chaque pixel 1 est constitué d'un interrupteur M (typiquement un transistor MOS en couche mince, TFT) de commande et d'une capacité Cl à la manière d'une cellule mémoire. Une première borne de conduction de l'interrupteur M est reliée à un conducteur de colonnes Col, commun à tous les interrupteurs de la colonne du panneau d'affichage. L'autre borne de conduction de l'interrupteur M est reliée à une première électrode de la capacité Cl du pixel, dont la deuxième électrode est reliée à la masse, le diélectrique de la capacité Cl étant constitué du cristal liquide servant à l'affichage et d'un condensateur de stockage en parallèle (non représenté). Les grilles des interrupteurs M sont reliées, en rangées, à des conducteurs de lignes Row. La présence de l'interrupteur M engendre un élément capacitif à effet Miller C entre sa grille et sa source, donc entre la ligne Row et la première électrode de la capacité Cl de la cellule 1. Les conducteurs de colonnes Col sont commandés par un circuit 2 de commande de colonnes (C DRIVER) fixant généralement les consignes de luminance tandis que les conducteurs de rangées Row sont commandés en balayage par un circuit 3 de commande de lignes (R DRIVER).

Pour un écran couleur, chaque cellule 1 constitue un sous-pixel d'un pixel couleur et la couleur est fournie par un filtre chromatique correspondant (RGB) disposé devant chaque sous-pixel.

La figure 2 représente, de façon schématique et partielle, le schéma électrique équivalent d'un panneau d'écran à cristaux liquides 10 et de son circuit de commande de lignes. Dans l'exemple de la figure 2, seules deux colonnes $Col_i$ et $Col_{i+1}$ ont été représentées. De même, seules cinq lignes $Row_1$, $Row_2$, $Row_3$, $Row_{n-1}$ et $Row_n$ ont été représentées. L'intégration de l'écran sur un substrat généralement en verre ne se limite plus aux cellules mais concerne également les circuits de commande des lignes. Ces circuits comportent, pour chaque ligne, une bascule B1, B2, B3..., Bn-1 et Bn de type RS dont la sortie directe Q sert à commander un interrupteur KR1, KR2, KR3, KRn-1, KRn placé sur chaque conducteur de rangée pour y amener un potentiel d'alimentation. L'entrée d'activation S de la première bascule B1 reçoit un signal de démarrage de balayage Start. L'entrée d'activation S de la bascule B2 est reliée à la ligne $Row_1$, en aval de l'interrupteur KR1 par rapport à la source d'alimentation, l'entrée d'activation S de la bascule B3 est reliée à la ligne $Row_2$, en aval de l'interrupteur KR2, etc., jusqu'à l'entrée d'activation S de la dernière bascule Bn reliée à la ligne $Row_{n-1}$, en aval de l'interrupteur KRn-1. Les entrées de réinitialisation R des bascules sont respectivement reliées au conducteur de la rangée de rang suivant, en aval de l'interrupteur KR correspondant, jusqu'à l'entrée R de la dernière bascule Bn qui est rebouclée sur la rangée $Row_1$.

L'alimentation des lignes s'effectue généralement par un balayage ligne. Les lignes de rang impair $Row_1$, $Row_3$, ..., $Row_{n-1}$ sont reliées ensemble en amont des interrupteurs KR1, KR3, ..., KRn-1 à une borne 32 tandis que les lignes de rang pair $Row_2$, ..., $Row_n$ sont, en amont de leurs interrupteurs respectifs, reliées à une borne 33. Les bornes 32 et 33 sont respectivement reliées aux points milieu de paires de commutateurs Q1 et Q2, respectivement Q3 et Q4, connectés en série entre des bornes d'application de potentiels respectivement haut $V_{ON}$ d'allumage et bas $V_{OFF}$ d'extinction.

Le balayage s'effectue par ligne en commençant par exemple par une ligne impaire en fermant les commutateurs Q1 et Q4 et en ouvrant les commutateurs Q2 et Q3 pour, à la fois, alimenter cette ligne impaire et forcer l'extinction de la ligne paire de rang suivant. Le signal Start appliqué sur l'entrée d'activation S de la première bascule B1 permet un balayage ligne automatique. L'adressage d'une rangée paire s'effectue de façon symétrique en ouvrant les commutateurs Q1 et Q4 et en fermant les commutateurs Q2 et Q3. Les commutations des interrupteurs Q1 à Q4 s'effectuent donc au rythme du balayage ligne sous commande d'un circuit 5 (CTRL).

Pour éviter des pertes d'énergie trop importantes, on prévoit généralement un étage de récupération de charges permettant, pour chaque colonne, d'utiliser l'énergie stockée dans les pixels à éteindre de la ligne qui vient d'être adressée pour aider l'allumage des pixels de la ligne suivante. Pour ce faire, on relie généralement les bornes 32 et 33 par un montage de deux diodes en anti-parallèle D1 et D2, chacune en série avec une résistance R1 et R2 et un interrupteur S1 et S2 commandés par le circuit 5.

Avant de démarrer un allumage de l'écran, le signal Start est activé pour initialiser toutes les bascules B1 à Bn, puis le signal disparaît pour permettre le début du balayage. Pour l'allumage des pixels de la première ligne impaire, les commutateurs Q1 et Q4 sont fermés, ce qui provoque l'application d'une tension $V_{ON}$ sur la borne 32 et d'une tension

$V_{OFF}$ sur la borne 33. Un courant peut alors circuler pour charger les capacités de pixels de cette première ligne. A la fin de cette période d'adressage, les transistors Q1 et Q4 sont ouverts, l'interrupteur S1 est fermé et l'interrupteur S2 est ouvert pendant une phase dite de récupération ou transfert d'énergie, ce qui permet de précharger la ligne suivante (paire) par la décharge de la ligne impaire qui vient d'être adressée. Cette phase place les premières lignes impaire et paire dans un potentiel d'équilibre intermédiaire. Puis, les commutateurs Q2 et Q3 sont fermés pour porter le potentiel de la ligne paire au niveau $V_{ON}$ et terminer la décharge de la première ligne impaire au niveau $V_{OFF}$. A la fin de l'allumage de la ligne paire, les commutateurs Q2 et Q3 sont ouverts, l'interrupteur S2 est fermé et l'interrupteur S1 est ouvert pour permettre une précharge de la ligne impaire suivante et reprendre ainsi le fonctionnement par fermeture des commutateurs Q1 et Q4.

Pour une même résolution d'écran, c'est-à-dire un rapport identique entre le nombre de lignes et le nombre de colonnes, on cherche généralement à augmenter le nombre de lignes et à réduire le nombre de colonnes. En effet, les circuits de commande de lignes qui gèrent l'alimentation sont généralement moins complexes que les circuits de commande de colonnes qui gèrent des données et, de plus, les circuits de commande de lignes sont généralement intégrés sur le verre pour des raisons de coût. Cependant, l'utilisation de nombreux circuits de commande de ligne intégrés sur du verre implique le besoin d'une alimentation susceptible de fournir une puissance importante.

Ainsi, on cherche à réaliser une alimentation permettant de générer les tensions $V_{ON}$ et $V_{OFF}$ et de fournir une puissance élevée, à partir d'une seule tension continue. Pour cela, il est connu d'utiliser des dispositifs hacheurs ou à découpage permettant soit une conversion de type survolteur ou élévateur de tension (boost), soit une conversion de type inverseur (buck-boost).

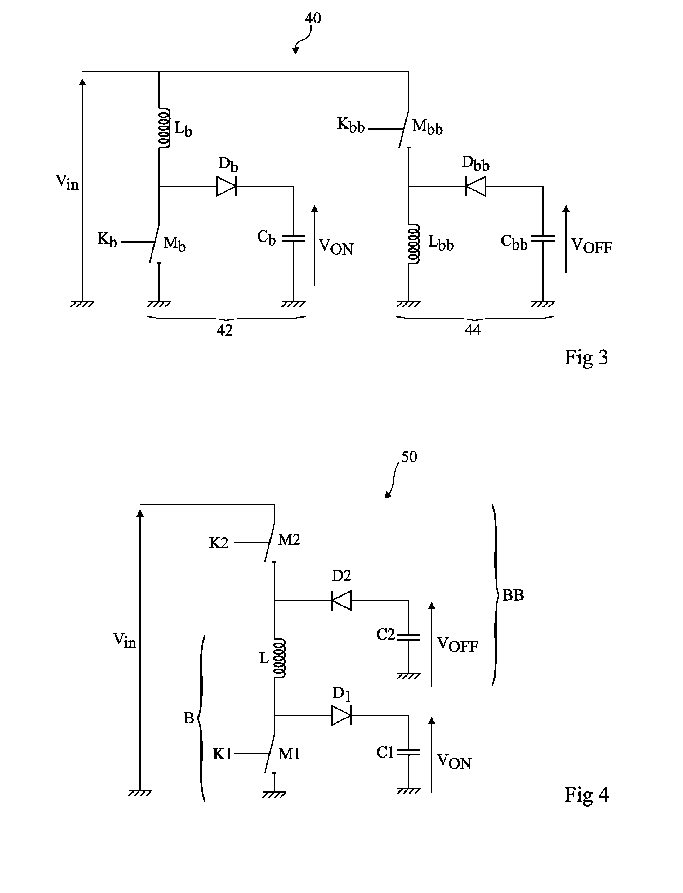

La figure 3 illustre un circuit 40 connu permettant la génération de tensions $V_{ON}$ et $V_{OFF}$ à partir d'un signal d'entrée continu $V_{in}$. Le circuit 40 comprend une première partie 42 formant un convertisseur boost destiné à générer la tension $V_{ON}$ et une seconde partie 44 formant un convertisseur buck-boost destiné à générer la tension $V_{OFF}$. Les parties 42 et 44 sont connectées en parallèle sur le signal d'entrée $V_{in}$.

Le convertisseur boost 42 comprend, entre les bornes d'application de la tension $V_{in}$, une association série d'une inductance $L_b$ et d'un interrupteur $M_b$ commandé par un signal $K_b$, une borne de l'interrupteur étant connectée à la masse. En parallèle de l'interrupteur $M_b$ est placée une diode $D_b$ dont l'anode est connectée au point milieu entre l'inductance $L_b$ et l'interrupteur $M_b$ et dont la cathode est connectée à une première borne d'un condensateur $C_b$, la seconde borne du condensateur $C_b$ étant connectée à la masse. La tension $V_{ON}$ de sortie du convertisseur 42 est prise aux bornes du condensateur $C_b$.

Le convertisseur buck-boost 44 comprend, entre les bornes d'application de la tension $V_{in}$, une association série d'un interrupteur $M_{bb}$ commandé par un signal $K_{bb}$ et d'une inductance $L_{bb}$ dont une des bornes est connectée à la masse. En parallèle de l'inductance $L_{bb}$ est placée une diode $D_{bb}$ dont la cathode est connectée au point milieu entre l'interrupteur $M_{bb}$ et l'inductance $L_{bb}$, et dont l'anode est connectée à une première borne d'un condensateur $C_{bb}$, la seconde borne du condensateur étant connectée à la masse. La tension $V_{OFF}$ est prise aux bornes de l'élément capacitif $C_{bb}$.

Pour réaliser les conversions par hachage, les interrupteurs $M_b$ et $M_{bb}$ sont commandés en ouverture et en fermeture à une fréquence importante, typiquement de plusieurs dizaines à quelques centaines de kilohertz, ce qui permet le stockage d'énergie magnétique dans chacune des inductances $L_b$ et $L_{bb}$ lorsque les interrupteurs associés sont fermés et la fourniture de cette énergie en sortie des convertisseurs 42 et 44 lorsque les interrupteurs associées sont ouverts. De façon connue, le convertisseur boost 42 délivre une tension $V_{ON}$ dont la valeur est supérieure à la tension $V_{in}$ et le convertisseur buck-boost 44 délivre une tension $V_{OFF}$ inférieure à la tension $V_{in}$ et négative.

Un circuit tel que représenté en figure 3 a l'inconvénient de comprendre deux éléments inductifs qui sont, que ce soit en technologie circuit intégré ou sur verre, des éléments électroniques très consommateur de surface et donc coûteux. Ainsi, un besoin existe d'un circuit permettant la génération, à partir d'une tension continue unique, d'une tension régulée de plus forte valeur et d'une tension régulée de signe opposé à cette tension continue mettant en jeu un unique élément inductif.

<u>Résumé</u>

Un objet d'un mode de réalisation de la présente invention est de prévoir un circuit permettant la fourniture, à partir d'un signal d'entrée continu et à l'aide de deux convertisseurs à découpage, de deux signaux régulés, l'un étant de plus forte valeur que le signal d'entrée et l'autre étant de valeur négative par rapport à une référence, le circuit comprenant un unique élément inductif.

Un autre objet d'un mode de réalisation de la présente invention est de prévoir un circuit comprenant des éléments permettant d'inhiber le fonctionnement de l'un des convertisseurs lorsque la charge associée à ce convertisseur ne nécessite pas d'énergie et de distribuer l'énergie non utilisée à l'autre des convertisseurs.

Ainsi, un mode de réalisation de la présente invention prévoit un circuit d'alimentation apte à fournir deux tensions régulées à partir d'une tension d'entrée continue, comprenant un convertisseur élévateur de tension à découpage et un convertisseur inverseur de tension à découpage, le circuit comprenant un unique élément inductif commun aux convertisseurs élévateur et inverseur.

Selon un mode de réalisation de la présente invention, le circuit comprend en outre des moyens pour alterner les périodes de découpage entre les deux convertisseurs.

Selon un mode de réalisation de la présente invention, les moyens affectent, lorsqu'une charge associée à un convertisseur ne nécessite pas d'apport d'énergie, sa période de découpage à l'autre convertisseur pour lui fournir l'énergie stockée dans l'élément inductif.

Selon un mode de réalisation de la présente invention, chaque convertisseur comprend un dipôle unidirectionnel, un élément capacitif et un interrupteur à découpage, chaque interrupteur à découpage étant commandé par un circuit de commande adapté à l'asservissement des tensions régulées.

Selon un mode de réalisation de la présente invention, le circuit de commande comprend un circuit logique et un circuit de comparaison des tensions régulées à des tensions régulées de référence.

Selon un mode de réalisation de la présente invention, le circuit de comparaison comprend : des premier et deuxième comparateurs réalisant une comparaison, respectivement, entre la première des tensions régulées et la première des tensions régulées de référence et entre la seconde des tensions régulées et la seconde des tensions régulées de référence, et fournissant des premier et deuxième signaux de comparaison ; un générateur de pente ; des troisième et quatrième comparateurs réalisant une comparaison, respectivement, entre le premier signal de comparaison et le signal fourni par le générateur de pente et entre le second signal de comparaison et le signal fourni par le générateur de pente, la sortie des troisième et quatrième comparateurs étant connectée en entrée du circuit logique ; et des cinquième et sixième comparateurs réalisant une comparaison, respectivement, entre le premier signal de comparaison et un premier signal de référence d'inhibition et entre le second signal de comparaison et un second signal de référence d'inhibition, la sortie des cinquième et sixième comparateurs étant connectée en entrée du circuit logique.

Selon un mode de réalisation de la présente invention, les premier et second signaux de référence d'inhibition sont égaux à la tension minimale fournie par le générateur de pente à laquelle on ajoute une tension comprise entre 20 et 200 mV.

Selon un mode de réalisation de la présente invention, le circuit logique est adapté à ouvrir les deux interrupteurs lorsque les charges associées aux deux convertisseurs ne nécessitent pas d'apport d'énergie.

Selon un mode de réalisation de la présente invention, chaque interrupteur à découpage est constitué d'un transistor MOS.

Un mode de réalisation de la présente invention prévoit en outre un procédé de commande d'un circuit d'alimentation tel que défini ci-dessus dans lequel, pendant un premier demi-cycle, la tension d'entrée continue est appliquée aux bornes de l'élément inductif pour y stocker de l'énergie puis l'élément inductif est amené à transmettre l'énergie stockée vers le convertisseur élévateur de tension et, pendant un second demi-cycle, la tension d'entrée continue est appliquée aux bornes de l'élément inductif pour y stocker de l'énergie, puis l'élément inductif est amené à transmettre l'énergie stockée vers le convertisseur inverseur de tension.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1, précédemment décrite, représente un pixel d'un écran LCD monochrome ou un sous-pixel d'un écran LCD couleur ;
la figure 2, précédemment décrite, représente de façon partielle le schéma électrique équivalent d'un panneau d'écran à cristaux liquides et de son circuit de commande de lignes ;
la figure 3, précédemment décrite, représente un exemple connu de circuit d'alimentation du circuit de la figure 2 ;
la figure 4 représente un circuit d'alimentation selon un mode de réalisation de la présente invention ;
les figures 5A à 5D illustrent le fonctionnement du circuit de la figure 4 ;
la figure 6 représente le circuit de commande du circuit de la figure 4 ;
les figures 7A à 7G sont des chronogrammes illustrant le fonctionnement normal du circuit de la figure 6 ;
les figures 8A à 8G sont des chronogrammes illustrant le fonctionnement du circuit de la figure 6 dans un cas particulier ;
la figure 9 représente une variante du circuit selon un mode de réalisation de la présente invention ;
les figures 10A à 10I sont des chronogrammes illustrant le fonctionnement du circuit de la figure 9 ; et
les figures 11A à 11D illustrent le fonctionnement du circuit de la figure 9 dans différentes configurations de commande de ce circuit.

On notera que, dans la description qui suit, de mêmes éléments ont été désignés par de mêmes références aux différentes figures.

### Description détaillée

Par souci de clarté, seuls les éléments utiles à la compréhension de l'invention ont été représentés et seront décrits. En particulier, le fonctionnement précis des convertisseurs boost et buck-boost ne sera pas décrit en détail.

La figure 4 illustre un circuit 50 de génération de deux signaux $V_{ON}$ et $V_{OFF}$ de tension régulée à partir d'une tension d'entrée continue unique $V_{in}$ comprenant un seul élément inductif selon un mode de réalisation de la présente invention. Le circuit comprend une première partie B formant un convertisseur boost permettant de générer un signal $V_{ON}$ et une seconde partie BB formant un convertisseur de type buck-boost permettant de générer un signal $V_{OFF}$.

Le circuit comprend, entre deux bornes d'application de la tension d'entrée continue $V_{in}$, une association série d'un interrupteur M2, d'un interrupteur M1 et d'un élément inductif L, l'élément inductif L étant placé entre les interrupteurs M1 et M2. L'interrupteur M2 a l'une de ses bornes connectée à la masse et est commandé par un signal de commande K2. L'interrupteur M1 est commandé par un signal de commande K1.

Du point milieu entre l'interrupteur M2 et l'élément inductif L part une branche comprenant un dipôle unidirectionnel, par exemple une diode D2, et un élément capacitif, par exemple un condensateur C2. La cathode de la diode D2 est connectée au point milieu entre l'interrupteur M2 et l'élément inductif L et une borne du condensateur C2 est connectée à la masse. La tension $V_{OFF}$ est prise aux bornes du condensateur C2, une charge à alimenter (non représentée) étant connectée en parallèle du condensateur C2.

Du point milieu entre l'élément inductif L et l'interrupteur M1 part une branche comprenant un dipôle unidirectionnel, par exemple une diode D1, et un élément capacitif, par exemple un condensateur C1. L'anode de la diode D1 est connectée au point milieu entre l'élément inductif L et l'interrupteur M1 et une borne du condensateur C1 est connectée à la masse. La tension $V_{ON}$ est prise aux bornes du condensateur C1, une charge à alimenter (non représentée) étant connectée en parallèle du condensateur C1.

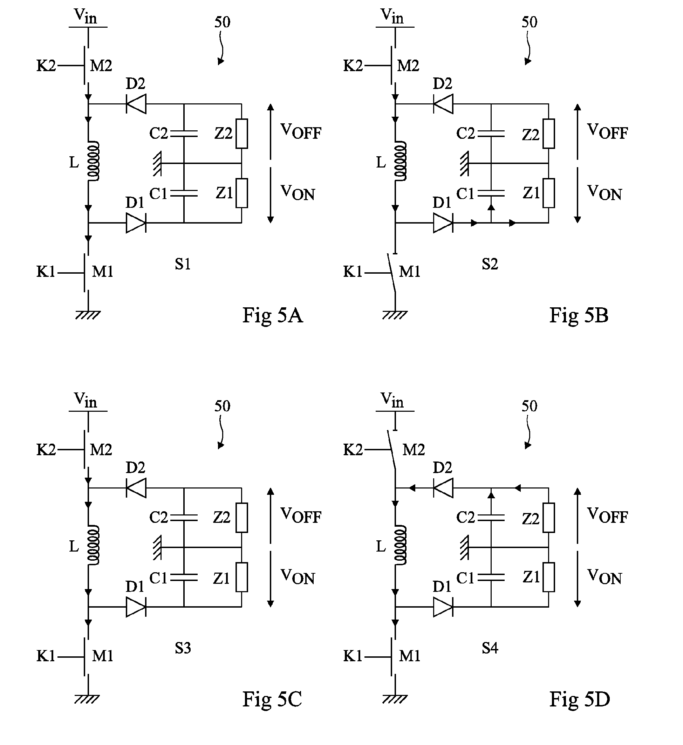

Les figures 5A à 5D représentent les états respectifs du circuit de la figure 4 lors de quatre phases de fonctionnement S1 à S4. Les étapes S1 et S2 des figures 5A et 5B sont des étapes mettant en jeu le convertisseur boost et les étapes S3 et S4 des figures 5C et 5D sont des étapes mettant en jeu le convertisseur buck-boost. Des charges (typiquement les lignes de l'écran), illustrées sous la forme d'impédances Z1 et Z2, sont placées en parallèle, respectivement, des condensateurs C1 et C2.

A l'étape S1 illustrée en figure 5A, les signaux de commande K1 et K2 sont prévus de façon que les interrupteurs M1 et M2 soient fermés. La tension $V_{in}$ est alors appliquée aux bornes de l'élément inductif L, ce qui provoque le stockage d'énergie magnétique dans celui-ci. Pendant cette étape, les diodes D1 et D2 sont bloquées et les charges Z1 et Z2 peuvent consommer l'énergie stockée, respectivement, dans les condensateurs C1 et C2.

A l'étape S2 illustrée en figure 5B, les signaux de commande K1 et K2 sont prévus de façon que l'interrupteur M1 soit ouvert et que l'interrupteur M2 soit fermé. L'énergie stockée dans l'élément inductif passe alors dans le circuit boost B et donc dans la diode D1, le condensateur C1 et la charge Z1. Cette étape forme une première période de roue libre.

A l'étape S3 illustrée en figure 5C, le circuit est dans la même configuration qu'à l'étape de la figure 5A, à savoir que les interrupteurs M1 et M2 sont fermés. Ceci permet le rechargement en énergie magnétique de l'élément inductif L.

A l'étape S4 illustrée en figure 5D, les signaux de commande K1 et K2 sont prévus de façon que l'interrupteur M2 soit ouvert et que l'interrupteur M1 soit fermé. L'énergie stockée dans l'élément inductif est alors transférée dans le circuit buck-boost BB, à savoir dans la diode D2, le condensateur C2 et la charge Z2. Cette étape forme ainsi une seconde période de roue libre.

Ainsi, sur une période d'horloge, les étapes de génération des tensions $V_{ON}$ et $V_{OFF}$ sont réalisées alternativement et un cycle comporte deux étapes de stockage d'énergie dans l'élément inductif et deux étapes de roue libre.

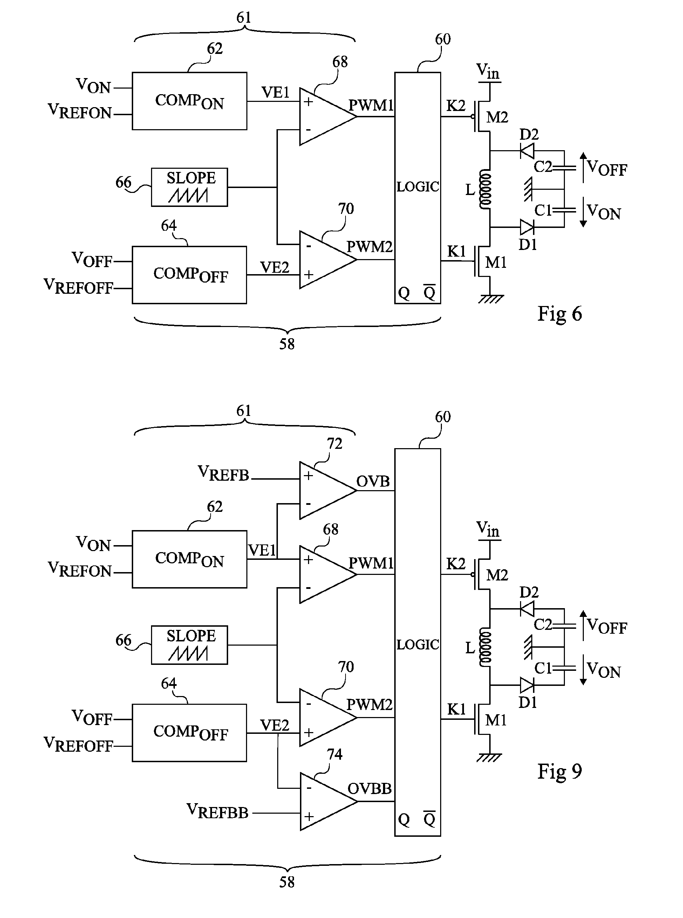

La figure 6 illustre en détail un exemple de circuit de commande 58 des interrupteurs M1 et M2 et d'asservissement des tensions $V_{ON}$ et $V_{OFF}$. En figure 6, les interrupteurs M1 et M2 sont représentés comme étant des transistors fonctionnant en commutation, le transistor M1 étant par exemple à canal N et le transistor M2 par exemple à canal P. Les grilles des transistors M1 et M2 sont connectées en sortie d'un circuit logique 60 (LOGIC) synchronisé sur une horloge Q fournie par un générateur d'horloge (non représenté) et comprenant deux entrées PWM1 et PWM2 provenant d'un circuit de comparaison 61.

Le circuit de comparaison 61 comprend quatre entrées, deux d'entre elles recevant les tensions $V_{ON}$ et $V_{OFF}$ et deux d'entre elles recevant des signaux de référence $V_{REFON}$ et $V_{REFOFF}$. Un premier comparateur 62 (COMP$_{ON}$) est destiné à fournir un signal VE1 représentatif de la différence entre les signaux $V_{REFON}$ et $V_{ON}$ et un second comparateur 64 (COMP$_{OFF}$) est destiné à fournir un signal VE2 représentatif de la différence entre les signaux $V_{REFOFF}$ et $V_{OFF}$. Ainsi, les signaux VE1 et VE2 sont inversement proportionnels à la variation des signaux $V_{ON}$ et $V_{OFF}$.

Un premier comparateur 68 reçoit le signal VE1 sur une de ses entrées et un signal issu d'un générateur de pente 66 (SLOPE) sur l'autre de ses entrées. Un second comparateur 70 reçoit le signal VE2 sur une de ses entrées et le signal issu du générateur de pente 66 sur l'autre de ses entrées. Les sorties des premier et second amplificateurs opérationnels 68 et 70 sont appelées, respectivement, PWM1 et PWM2.

Le circuit logique 60 reçoit en entrée les signaux PWM1 et PWM2 et fournit des signaux K1 et K2 de commande des transistors M1 et M2.

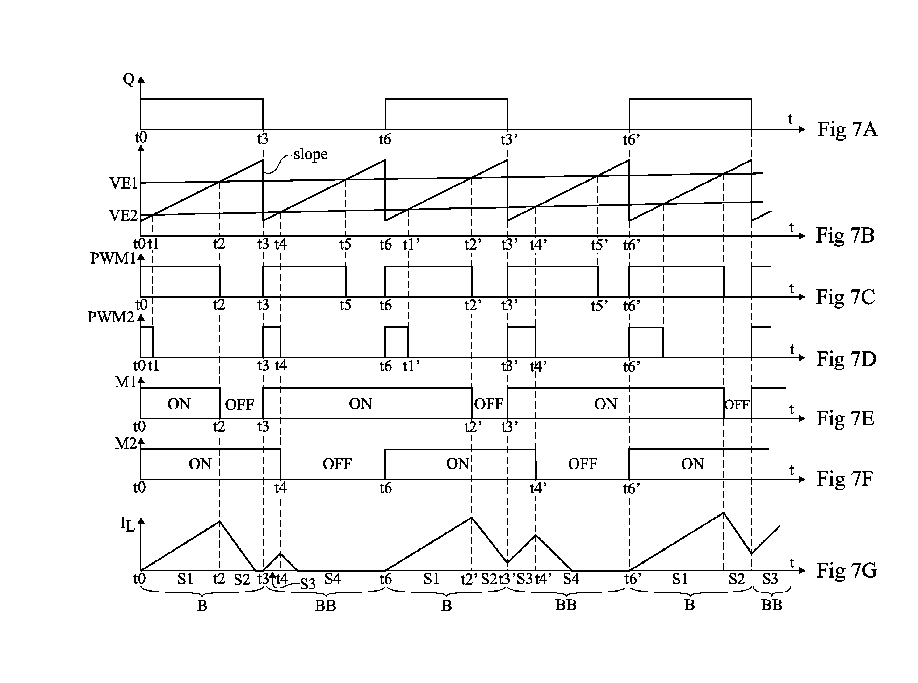

Les figures 7A à 7G sont des chronogrammes illustrant le fonctionnement du circuit de la figure 6 dans un cas de fonctionnement classique. La figure 7A illustre le signal d'horloge Q, la figure 7B le signal généré par le générateur de pente 66 et les signaux VE1 et VE2, les figures 7C et 7D illustrent, respectivement les signaux PWM1 et PWM2, les figures 7E et 7F illustrent, respectivement, les états des transistors M1 et M2 et la figure 7G représente le courant IL circulant dans l'élément inductif L.

Le fonctionnement du circuit de la figure 6 est décrit dans le cas où le circuit fonctionne en convertisseur boost (étape S1 et S2) lorsque le signal d'horloge Q est à l'état haut et en convertisseur buck-boost (étapes S3 et S4) lorsque le signal d'horloge Q est à l'état bas. On notera que l'inverse est également possible.

Une première étape S1 d'un demi-cycle de type boost (B) commence à un instant t0 où le signal d'horloge Q passe à l'état haut. A cet instant t0, le signal issu du générateur de pente 66 (slope) est minimal et les tensions VE1 et VE2 sont supérieures au signal issu du générateur de pente 66, ce qui fixe les signaux PWM1 et PWM2 à l'état haut et rend les transistors M1 et M2 passants (état ON).

A un instant t1, le signal VE2 devient inférieur au signal issu du générateur de pente 66, ce qui fait passer le signal PWM2 à l'état bas. A un instant t2, le signal VE1 devient inférieur au signal issu du générateur de pente 66, ce qui fait passer le signal PWM1 à l'état bas (étape S2). A un instant t3, l'horloge Q passe à l'état bas (étape S3, demi-cycle buck-boost), ce qui réinitialise le signal issu du générateur de pente 66 et fait passer les signaux PWM1 et PWM2 à l'état haut (les tensions VE1 et VE2 étant alors supérieures au signal slope). A un instant t4, le signal slope devient supérieur au signal VE2 (étape S4), ce qui fait passer le signal PWM2 à l'état bas et, à un instant t5, le signal slope devient supérieur au signal VE1, ce qui fait passer le signal PWM1 à l'état bas. A un instant t6, le signal d'horloge Q repasse à l'état haut (étape S1), ce qui réinitialise la pente du générateur de pente 66 et démarre un nouveau demi-cycle de type boost.

En terme d'équation logique, on a : M1=Q+PWM1 et M2=Q+PWM2.

Ainsi, entre les instants t0 et t2, les interrupteurs M1 et M2 sont fermés (ON), ce qui permet la circulation d'un courant IL dans l'élément inductif L et l'augmentation de ce courant. Entre les instants t2 et t3, l'interrupteur M1 est ouvert (OFF) et le courant IL diminue, ce courant étant "transféré" vers le circuit boost (roue libre). Entre les instants t3 et t4, les interrupteurs M1 et M2 sont fermés (ON), ce qui augmente la valeur du courant circulant dans l'élément inductif L et, entre les instants t4 et t6, l'interrupteur M2 est ouvert (OFF) et le courant IL diminue (roue libre), ce courant étant "transféré" par le circuit buck-boost.

Dans le premier cycle représenté en figures 7A à 7G, les conversions boost et buck-boost sont de type discontinues, c'est-à-dire qu'aux instants t3 et t6, le courant IL dans l'élément inductif L est nul.

Dans le second cycle représenté (instants caractéristiques référencés comme ceux du premier cycle avec un '), le fonctionnement est continu-discontinu. La tension VE1 ayant varié, du fait d'une variation de la tension $V_{ON}$ en sortie du circuit boost (la charge placée en sorte de ce circuit consomme plus d'énergie), l'intervalle de temps entre les instants t6 et t2' augmente et l'intervalle de temps entre les instants t2' et t3' diminue. Le demi-cycle boost B est alors de type "continu" puisque, à l'instant t3', le courant IL dans l'élément inductif L n'est pas nul. Le mode buck-boost reste cependant discontinu dans ce second cycle.

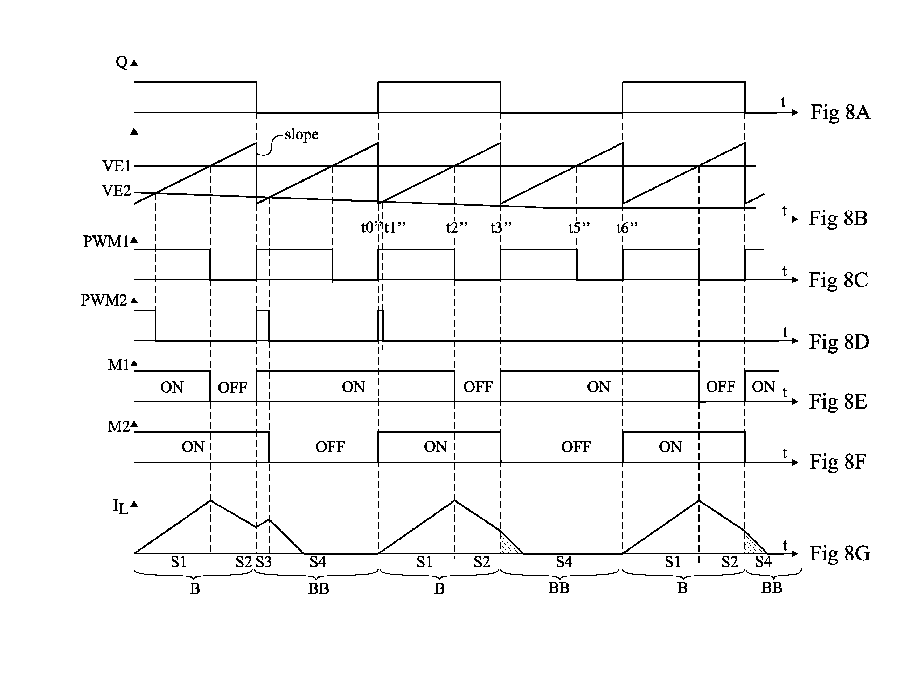

Les figures 8A à 8G illustrent des chronogrammes du circuit de la figure 6 dans un cas particulier de fonctionnement où l'une des charges ne consomme quasi plus d'énergie.

Le premier cycle représenté dans ces figures est similaire au second cycle des figures 7A à 7G (continu/discontinu). Le second cycle commence à un instant t0" et, pendant les étapes S1 et S2 de ce second cycle (horloge Q à l'état haut, entre les instants t0" et t3"), le fonctionnement se poursuit de façon classique (demi-cycle de type boost). Le courant dans l'élément inductif L ne s'annule pas à l'instant t3".

A l'instant t3" commence le demi-cycle théorique de type buck-boost (BB). A cet instant, le signal VE2 est inférieur au signal fourni par le générateur de pente 66 (slope). Ceci peut être dû au fait que la charge Z2 associée au convertisseur buck-boost ne consomme pas d'énergie ou plus d'énergie (charge déconnectée par exemple). Le signal PWM2 reste ainsi à l'état bas à l'instant t3" et entre les instants t3" et t6". L'interrupteur M2 s'ouvre à l'instant t3" et reste ouvert jusqu'à l'instant t6". Ainsi, entre les instants t3" et t6" du demi-cycle buck-boost, l'énergie stockée dans l'élément inductif L est transférée vers le convertisseur buck-boost (étape S4, partie hachurée de la figure 8G), bien que la charge Z2 associée à ce circuit ne nécessite pas d'énergie supplémentaire. Ainsi, il se crée une surtension en sortie du convertisseur buck-boost.

Il serait préférable d'éviter les surtensions et de redistribuer l'énergie initialement destinée à l'un des convertisseur boost ou buck-boost alors que celui-ci n'en a pas besoin à l'autre des convertisseurs.

La figure 9 illustre un autre mode de réalisation du circuit de génération des tensions $V_{OFF}$ et $V_{ON}$. Le circuit représenté reprend tous les éléments du circuit de la figure 6 et comprend de plus, dans le circuit de comparaison 61, deux comparateurs 72 et 74, par exemple des amplificateurs opérationnels, dont les sorties sont fournies en entrée du circuit logique 60 (LOGIC).

Le comparateur 72 reçoit en entrée le signal VE1 et un signal de référence $V_{REFB}$ et fournit une sortie OVB en entrée du circuit logique 60. Le comparateur 74 reçoit en entrée le signal VE2 et un signal de référence $V_{REFBB}$ et fournit une sortie OVBB en entrée du circuit logique 60.

Le circuit logique 60 est prévu pour réaliser les opérations logiques suivante :

$$K1 = \left[ \left( (\overline{Q} + PWM1).\overline{OVBB} + (Q.PWM1).OVBB \right) + OVB \right].\left( \overline{OVB} + \overline{OVBB} \right),$$

et

$$K2 = \left[ \left( (Q + PWM2).\overline{OVB} + (\overline{Q}.PWM2).OVB \right) + OVBB \right].\left( \overline{OVB} + \overline{OVBB} \right).$$

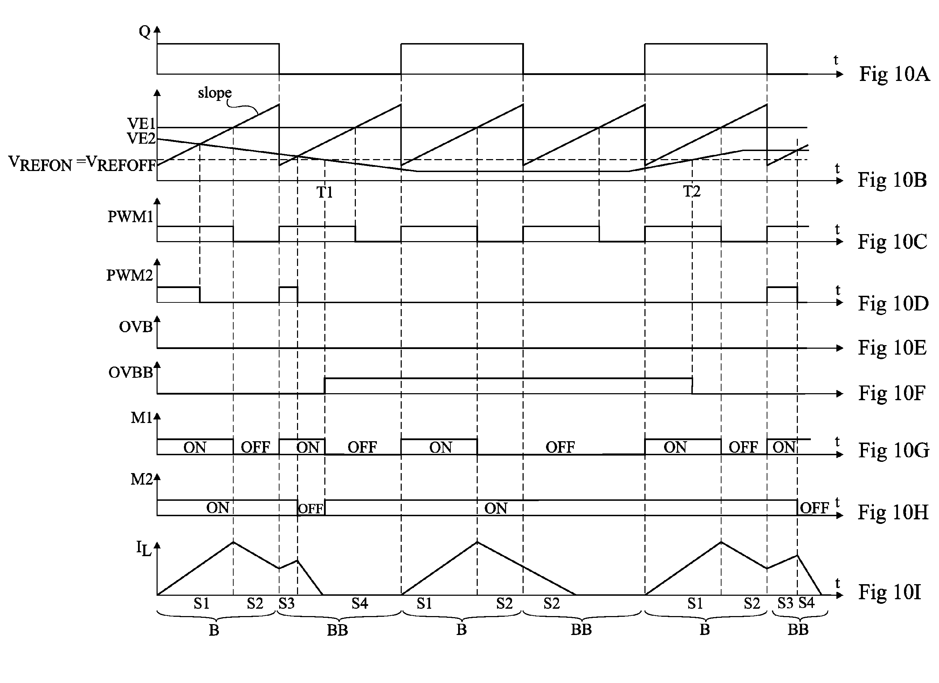

Le fonctionnement du circuit de la figure 9 est représenté dans les chronogrammes des figures 10A à 10I qui illustrent le signal d'horloge Q (figure 10A), les signaux VE1, VE2, issu du générateur de pente 66 (slope), $V_{REFON}$ et $V_{REFOFF}$ (figure 10B), les signaux PWM1 (figure 10C), PWM2 (figure 10D), OVB (figure 10E) et OVBB (figure 10F), les états des transistors M1 (figure 10G) et M2 (figure 10H) et la courbe du courant IL (figure 10I).

Dans l'exemple représenté, on choisit les tensions $V_{REFOFF}$ et $V_{REFON}$ égales et légèrement supérieures à la tension minimale fournie par le générateur de pente 66, par exemple supérieure à cette tension d'une tension comprise entre 20 et 200 mV, par exemple de 100 mV. On notera que ces tensions $V_{REFOFF}$ et $V_{REFON}$ pourront également être distinctes l'une de l'autre pour un fonctionnement asymétrique, en fonction de l'utilisation souhaitée du circuit.

Le premier demi-cycle boost représenté (étapes S1 et S2) se déroule de façon classique, l'énergie dans l'élément inductif L étant fournie au convertisseur boost. Le premier demi-cycle buck-boost (étapes S3 et S4) commence de façon classique, les interrupteurs M1 et M2 étant fermés (ON) puis l'interrupteur M1 ouvert (OFF), le courant IL dans l'élément inductif L augmentant puis diminuant. A un instant T1 de la seconde partie (roue libre S4) de ce demi-cycle, la tension VE2 devient inférieure à la tension $V_{REFON}$, ce qui fait passer le signal OVBB à l'état haut. Le fonctionnement du circuit est alors modifié. Tant que le signal OVBB est à l'état haut, pendant le demi-cycle buck-boost, l'interrupteur M2 est forcé à la fermeture, ce qui inhibe le fonctionnement du convertisseur buck-boost, et l'interrupteur M1 est forcé à l'ouverture ce qui permet, si de l'énergie est stockée dans l'élément inductif au début du convertisseur buck-boost BB, de fournir cette énergie au convertisseur boost. Pendant le demi-cycle boost, le fonctionnement du circuit est classique (première phase S1 avec l'interrupteur M1 fermé, seconde phase S2 avec l'interrupteur M1 ouvert).

Le signal OVBB est à l'état haut pendant tout le second cycle représenté. Ainsi, une fois le demi-cycle boost réalisé (étapes S1 et S2), les étapes S3 et S4 sont dédiées au circuit boost, ce qui prolonge l'étape S2.

A un instant T2 (par exemple pendant l'étape S1 d'un cycle boost B), le signal VE2 devient supérieur au signal $V_{REFON}$, ce qui force le signal OVBB à l'état bas et permet le fonctionnement normal du circuit.

Ainsi, le circuit présenté en figure 9 permet d'inhiber l'un des deux convertisseurs lorsque la charge associée à ce convertisseur ne demande pas d'énergie et de redistribuer un éventuel surplus d'énergie (si le demi-cycle est continu) à l'autre convertisseur. De plus, dans le cas où les deux charges associées aux convertisseurs ne nécessitent pas d'énergie (signaux OVB et OVBB à l'état haut), le circuit logique 60 est prévu pour commander l'ouverture des interrupteurs M1 et M2, ce qui déconnecte le circuit.

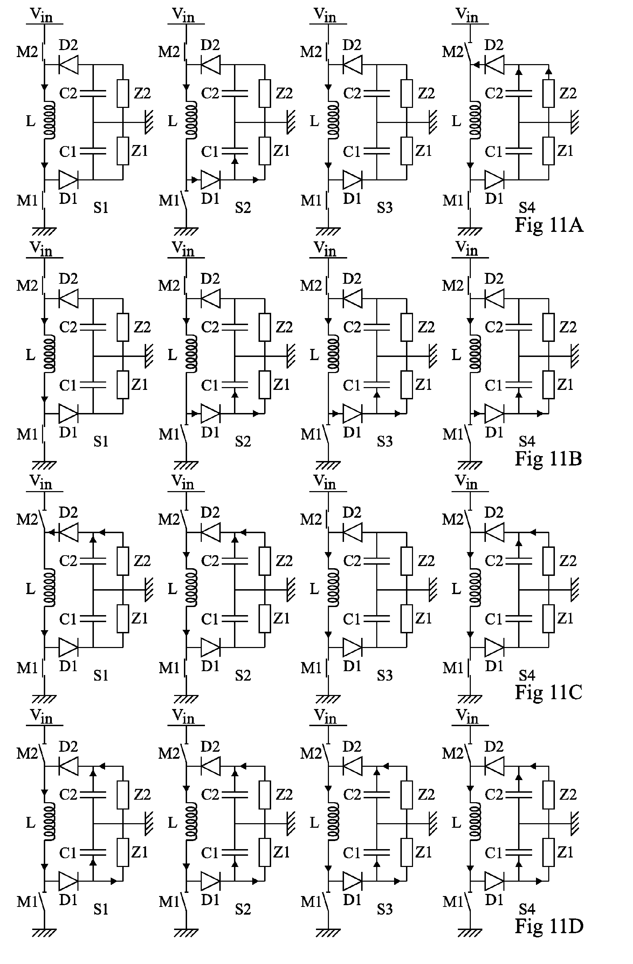

Les figures 11A à 11D illustrent le fonctionnement du circuit de la figure 9 en fonction de différents états des signaux OVB et OVBB, pendant un cycle S1 à S4.

La figure 11A illustre le fonctionnement classique du circuit lorsque les signaux OVB et OVBB sont à l'état bas. Le fonctionnement est alors le même que celui décrit en relation avec les figures 5A à 5D. A l'étape S1, les interrupteurs M1 et M2 sont fermés, ce qui stocke de l'énergie dans l'élément inductif L. Pendant l'étape S2 (M1 ouvert, M2 fermé), l'énergie stockée dans l'élément inductif L est fournie au convertisseur boost (C1 et Z1). A l'étape S3, les interrupteurs M1 et M2 sont de nouveau fermés pour stocker de l'énergie dans l'élément inductif L et, à l'étape S4 (M1 fermé, M2 ouvert), l'énergie stockée dans l'élément inductif L est fournie au convertisseur buck-boost (C2 et Z2).

La figure 11B illustre le fonctionnement du circuit lorsque le signal OVB est à l'état bas et que le signal OVBB est à l'état haut. Pendant l'étape S1, les deux interrupteurs M1 et M2 sont fermés, ce qui stocke de l'énergie dans l'élément inductif L. Pendant l'étape S2 (M1 ouvert, M2 fermé), l'énergie stockée dans l'élément inductif L est fournie au convertisseur boost (C1 et Z1). Aux étapes S3 et S4, contrairement à ce qui devrait se produire normalement (M1 et M2 fermés puis M2 ouvert), le circuit reste dans la configuration de l'étape S3, ce qui permet encore le transfert de l'énergie vers le convertisseur boost B.

La figure 11C illustre le fonctionnement du circuit lorsque le signal OVB est à l'état haut et que le signal OVBB est à l'état bas. Pendant les étapes S1 et S2, contrairement à ce qui devrait se produire normalement (M1 et M2 fermés puis M1 ouvert), le circuit reste dans la configuration de transmission d'énergie dans le circuit buck-boost, à savoir interrupteur M2 ouvert et interrupteur M1 fermé. A l'étape S3, les deux interrupteurs M1 et M2 sont fermés, ce qui stocke de l'énergie dans l'élément inductif L et la quatrième étape du cycle est de type buck-boost (M2 ouvert, M1 fermé), l'énergie stockée dans l'élément inductif L étant fournie au circuit buck-boost (C2 et Z2).

La figure 11D illustre le fonctionnement du circuit lorsque les signaux OVB et OVBB sont à l'état haut. Dans ce cas, le circuit reste bloqué pendant toutes les étapes de fonctionnement S1 à S4, à savoir que les interrupteurs M1 et M2 sont ouverts.

Ainsi, avantageusement, le circuit proposé permet de redistribuer l'énergie stockée dans l'élément inductif dans l'un des convertisseurs lorsque la charge associée à l'autre convertisseur ne nécessite pas d'énergie. Un tel circuit permet donc d'éviter la formation de surtensions en sortie des convertisseurs, et donc de mieux distribuer la puissance fournie par les convertisseurs boost et buck-boost.

Des modes de réalisation particuliers de la présente invention ont été décrits. Diverses variantes et modifications apparaîtront à l'homme de l'art. En particulier, dans les figures, les interrupteurs M1 et M2 sont représentés comme étant des transistors MOS particuliers. On notera que tout type de dispositif formant interrupteur commandable pourra être utilisé pour former les interrupteurs M1 et M2. De même, l'élément inductif L et les éléments capacitifs C1 et C2 pourront être de tous types connus, par exemple une association série ou parallèle de plusieurs éléments inductifs ou capacitifs. De plus, on notera que les comparateurs du circuit de comparaison 61, et notamment les comparateurs 68 et 70, pourront être des comparateurs à hystérésis. De plus, le circuit d'alimentation présenté ici pourra alimenter tout circuit adapté autre qu'un circuit électronique associé à un écran LCD, comme par exemple des écrans à diodes électroluminescentes organiques (OLED).

## Revendications

1. Circuit d'alimentation apte à fournir deux tensions régulées ($V_{ON}$, $V_{OFF}$) à partir d'une tension d'entrée continue ($V_{in}$), comprenant un convertisseur élévateur de tension à découpage (B), un convertisseur inverseur de tension à découpage (BB) et un élément inductif (L) commun aux convertisseurs élévateur et inverseur, chaque convertisseur comprenant un interrupteur à découpage (M1, M2) commandé par un circuit de commande (58), le circuit de commande (58) comprenant un circuit logique (60) et un circuit de comparaison (61), le circuit de comparaison (61) comprenant :

   des premier et deuxième comparateurs (62, 64) réalisant une comparaison, respectivement, entre la première des tensions régulées ($V_{ON}$) et la première des tensions régulées de référence et entre la seconde des tensions régulées ($V_{OFF}$) et la seconde des tensions régulées de référence ($V_{REFOFF}$), et fournissant des premier et deuxième signaux de comparaison (VE1, VE2) ;
   un générateur de pente (66) ;
   des troisième et quatrième comparateurs (68, 70) réalisant une comparaison, respectivement, entre le premier signal de comparaison (VE1) et le signal fourni par le générateur de pente et entre le second signal de comparaison (VE2) et le signal fourni par le générateur de pente, la sortie des troisième et quatrième comparateurs (PWM1, PWM2) étant connectée en entrée du circuit logique (60) ; et
   des cinquième et sixième comparateurs (72, 74) réalisant une comparaison, respectivement, entre le premier signal de comparaison (VE1) et un premier signal de référence d'inhibition ($V_{REFB}$) et entre le second signal de comparaison (VE2) et un second signal de référence d'inhibition ($V_{REFBB}$), la sortie des cinquième et sixième comparateurs étant connectée en entrée du circuit logique.

2. Circuit selon la revendication 1, dans lequel chaque convertisseur comprend en outre un dipôle unidirectionnel (D1, D2) et un élément capacitif (C1, C2).

3. Circuit selon la revendication 1 ou 2, dans lequel les premier et second signaux de référence d'inhibition sont égaux à la tension minimale fournie par le générateur de pente (66) à laquelle on ajoute une tension comprise entre 20 et 200 mV.

4. Circuit selon l'une quelconque des revendications 1 à 3, dans lequel le circuit logique (60) est adapté à ouvrir les deux interrupteurs (M1, M2) lorsque les charges associées aux deux convertisseurs ne nécessitent pas d'apport d'énergie.

**5.** Circuit selon l'une quelconque des revendications 1 à 4, dans lequel une première sortie du circuit logique (60), destinée à commander le premier interrupteur à découpage (M1), fournit un signal d'équation logique :

$$K1 = \left[\left(\left(\overline{Q} + PWM1\right) . \overline{OVBB} + \left(Q . PWM1\right) . OVBB\right) + OVB\right] . \left(\overline{OVB} + \overline{OVBB}\right),$$

et
une seconde sortie du circuit logique (60), destinée à commander le second interrupteur à découpage (M2), fournit un signal d'équation logique :

$$K2 = \left[\left(\left(Q + PWM2\right) . \overline{OVB} + \left(\overline{Q} . PWM2\right) . OVB\right) + OVBB\right] . \left(\overline{OVB} + \overline{OVBB}\right),$$

Q étant un signal d'horloge, $\overline{Q}$ l'inverse de ce signal d'horloge, PWM1, PWM2, OVB et OVBB étant, respectivement, le signal en sortie du troisième, du quatrième, du cinquième et du sixième comparateur, $\overline{OVB}$ et $\overline{OVBB}$ étant, respectivement, les signaux inverses de OVB et OVBB.

**6.** Circuit selon l'une quelconque des revendications 1 à 5, dans lequel chaque interrupteur à découpage (M1, M2) est constitué d'un transistor MOS.

**7.** Procédé de commande d'un circuit d'alimentation selon l'une quelconque des revendications 1 à 6, dans lequel :

pendant un premier demi-cycle, la tension d'entrée continue ($V_{in}$) est appliquée aux bornes de l'élément inductif (L) pour y stocker de l'énergie, puis l'élément inductif est amené à transmettre l'énergie stockée vers le convertisseur élévateur de tension (B) ; et
pendant un second demi-cycle, la tension d'entrée continue est appliquée aux bornes de l'élément inductif pour y stocker de l'énergie, puis l'élément inductif est amené à transmettre l'énergie stockée vers le convertisseur inverseur de tension (BB).

Fig 1

Fig 2

Fig 3

Fig 4

Fig 5A

Fig 5B

Fig 5C

Fig 5D

Fig 6

Fig 9

Q

t0        t3        t6        t3'        t6'        t → Fig 7A

slope

VE1

VE2

t0 t1        t2        t3 t4        t5        t6 t1'        t2'        t3' t4'        t5' t6'        t → Fig 7B

PWM1

t0        t2        t3        t5        t6        t2'        t3'        t5' t6'        t → Fig 7C

PWM2

t0 t1        t3 t4        t6 t1'        t3' t4'        t6'        t → Fig 7D

M1

ON | OFF | ON | OFF | ON | OFF

t0        t2 t3        t2' t3'        t → Fig 7E

M2

ON | OFF | ON | OFF | ON

t0        t4        t6        t4'        t6'        t → Fig 7F

I_L

t0        S1        t2        S2        t3 t4  S3        S4        t6        S1        t2' S2 t3' S3 t4'        S4        t6'        S1        S2        S3        t → Fig 7G

B        BB        B        BB        B        BB

EP 2 278 696 A1

Fig 8A

Fig 8B

Fig 8C

Fig 8D

Fig 8E

Fig 8F

Fig 8G

EP 2 278 696 A1

15

Q — Fig 10A

VE1
VE2
$V_{REFON} = V_{REFOFF}$
slope
T1
T2
Fig 10B

PWM1 — Fig 10C

PWM2 — Fig 10D

OVB — Fig 10E

OVBB — Fig 10F

M1 ON OFF ON OFF ON OFF ON OFF ON — Fig 10G

M2 ON OFF ON OFF — Fig 10H

$I_L$ — Fig 10I

S1 S2 S3 S4 S1 S2 S2 S1 S2 S3 S4

B BB B BB B BB

EP 2 278 696 A1

Fig 11A

Fig 11B

Fig 11C

Fig 11D

**EP 2 278 696 A1**

Europäisches
Patentamt

European
Patent Office

Office européen
des brevets

## RAPPORT DE RECHERCHE EUROPEENNE

Numéro de la demande

EP 10 16 9904

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2003/117209 A1 (TSUCHIYA CHIKARA [JP] ET AL) 26 juin 2003 (2003-06-26) * abrégé * * figures 1,3-8 * * alinéas [0036] - [0046], [0060], [0066] - [0076] * | 6 | INV. H02M3/158 |
| A | DE 33 16 251 A1 (BOSCH GMBH ROBERT [DE]) 8 novembre 1984 (1984-11-08) * abrégé * * figures 1-4 * * page 10, ligne 20 - page 11, ligne 5 * | 6 | |
| A | DE 10 2006 032418 A1 (AUSTRIAMICROSYSTEMS AG [AT]) 17 janvier 2008 (2008-01-17) * abrégé * * alinéas [0021], [0035], [0054], [0068], [0069] * * figures 1,3-7 * | 6 | |
| A | US 2006/214648 A1 (LIU JING-MENG [TW] ET AL) 28 septembre 2006 (2006-09-28) * abrégé * * alinéas [0062] - [0064]; figures 5,13,14 * | 6 | DOMAINES TECHNIQUES RECHERCHES (IPC) H02M |
| A | US 2004/027104 A1 (ISHII TAKUYA [JP] ET AL) 12 février 2004 (2004-02-12) * figures 1-3 * * alinéas [0048] - [0058] * | 6 | |
| A | JP 2000 287441 A (SHINDENGEN ELECTRIC MFG) 13 octobre 2000 (2000-10-13) * abrégé * * figures 1,2 * -/-- | 6 | |

Le présent rapport a été établi pour toutes les revendications

| Lieu de la recherche | Date d'achèvement de la recherche | Examinateur |
|---|---|---|
| La Haye | 17 août 2010 | Lund, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

18

Europäisches
Patentamt

European
Patent Office

Office européen
des brevets

**RAPPORT DE RECHERCHE EUROPEENNE**

Numéro de la demande

EP 10 16 9904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2002/105307 A1 (GROENEVELD DIRK WOUTER JOHANNE [NL] ET AL) 8 août 2002 (2002-08-08) * figures 6,7 * * alinéas [0056], [0057] * ----- | 6 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 17 août 2010 | Lund, Michael |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 16 9904

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-08-2010

| Document brevet cité au rapport de recherche | | Date de publication | Membre(s) de la famille de brevet(s) | | Date de publication |
|---|---|---|---|---|---|
| US 2003117209 | A1 | 26-06-2003 | CN | 1430326 A | 16-07-2003 |
| | | | DE | 60213754 T2 | 30-11-2006 |
| | | | EP | 1324477 A2 | 02-07-2003 |
| | | | JP | 3888895 B2 | 07-03-2007 |
| | | | JP | 2003186552 A | 04-07-2003 |
| | | | KR | 20030053049 A | 27-06-2003 |
| | | | TW | 588498 B | 21-05-2004 |
| DE 3316251 | A1 | 08-11-1984 | AT | 381813 B | 10-12-1986 |
| | | | JP | 60121958 A | 29-06-1985 |
| DE 102006032418 | A1 | 17-01-2008 | AUCUN | | |
| US 2006214648 | A1 | 28-09-2006 | TW | 273763 B | 11-02-2007 |
| US 2004027104 | A1 | 12-02-2004 | CN | 1486529 A | 31-03-2004 |
| | | | EP | 1427093 A1 | 09-06-2004 |
| | | | WO | 03026116 A1 | 27-03-2003 |
| JP 2000287441 | A | 13-10-2000 | AUCUN | | |
| US 2002105307 | A1 | 08-08-2002 | WO | 02060043 A1 | 01-08-2002 |
| | | | JP | 2004518396 T | 17-06-2004 |

EPO FORM P0460

Pour tout renseignement concernant cette annexe : voir Journal Officiel de l'Office européen des brevets, No.12/82